Europäisches Patentamt

European Patent Office

Office européen des brevets

(11) Veröffentlichungsnummer: **0 316 513 B1**

(12) **EUROPÄISCHE PATENTSCHRIFT**

(45) Veröffentlichungstag der Patentschrift: **22.09.93**

(21) Anmeldenummer: **88111475.5**

(22) Anmeldetag: **16.07.88**

(51) Int. Cl.⁵: **G02F 1/21**, H04B 10/00

(54) Optischer Einseitenbandmodulator.

(30) Priorität: **19.11.87 DE 3739101**

(43) Veröffentlichungstag der Anmeldung:
**24.05.89 Patentblatt 89/21**

(45) Bekanntmachung des Hinweises auf die
Patenterteilung:
**22.09.93 Patentblatt 93/38**

(84) Benannte Vertragsstaaten:
**DE FR GB IT NL SE**

(56) Entgegenhaltungen:
**EP-A- 0 016 608**
**US-A- 3 962 657**

**PATENT ABSTRACTS OF JAPAN, Band 11,**
**Nr. 148 (E-506), 24. Mai 1987; & JP-A-61 287**
**304**

**APPL. PHYS. LETT., Band 45, Nr. 5, 1. Sep-**
**tember 1984, Seiten 490-492; F. HEISMANN et**
**al.: "Integrated-optical frequency translator**
**with stripe waveguide"**

(73) Patentinhaber: **ATLAS ELEKTRONIK GMBH**

**D-28305 Bremen(DE)**

(72) Erfinder: **Rathjen, Dirk, Dr. Dipl.-Phys.**
**Am Rüten 68**
**D-2800 Bremen 33(DE)**
Erfinder: **Burggraf, Hubert, Dr. Dipl.-Phys.**
**Hoher Acker 6**
**D-2806 Oyten-Bassen(DE)**

(74) Vertreter: **Schulz, Klaus, Patentassessor,**
**Dipl.-Ing.**
**c/o Atlas Elektronik GmbH, Patentabteilung**
**D-28305 Bremen (DE)**

# Beschreibung

Die Erfindung betrifft einen optischen Einseitenbandmodulator für auf Licht zu modulierende Signale, deren Signalfrequenz wesentlich niedriger als die Lichtfrequenz ist.

Eingangssignale eines Einseitenbandmodulators sind ein hochfrequenter Träger und ein darauf zu modulierendes niederfrequenteres Signal. Als Modulationsprodukt erhält man das obere oder untere Seitenband des hochfrequenten Trägers, das sämtliche Informationen des niederfrequenten Signals bezüglich seiner Amplitude, Frequenz und Phase wiedergibt.

In der Elektronik sind verschiedene Schaltanordnungen zur Realisierung eines Einseitenbandmodulators bekannt. Die Schaltanordnung nach der Phasenmethode ist besonders elegant, da sie ohne Filterschaltung auskommt, und ist beispielsweise im Taschenbuch Elektrotechnik, Band 3, Nachrichtentechnik, herausgegeben von E. Philippow, 1967, VEB Verlag Technik Berlin, auf Seite 1168, beschrieben. Ein solcher Einseitenbandmodulator besteht aus zwei Multiplikationsschaltungen oder Amplitudenmodulatoren.

Träger und niederfrequentes Signal werden an den einen Amplitudenmodulator unmittelbar und an den anderen Amplitudenmodulator über je eine 90°-Phasenschieberschaltung angeschlossen und deren Ausgangssignale anschließend addiert bzw. subtrahiert. Bei der Addition entsteht das obere Seitenband, welches die Amplitude des niederfrequenten Signals, die Summe aus Trägerfrequenz und Signalfrequenz und die Summe aus Signalphase und Phase des Trägers aufweist. Bei der Subtraktion entsteht das untere Seitenband, das als Amplitude die Amplitude des niederfrequenten Signals enthält. Seine Frequenz ist die Differenz aus Trägerfrequenz und Signalfrequenz, seine Phase ist die Differenz aus Phase des Trägers und Signalphase.

Die Bauelemente eines solchen Einseitenbandmodulators sind abhängig von der Trägerfrequenz und der Signalfrequenz auszuwählen. Als Modulatoren werden bei Trägerfrequenzen bis zu einigen 100 kHz und Signalfrequenzen bis zu einigen kHz, beispielsweise Ringmodulatoren, als Addier- oder Subtrahierstufe, beispielsweise Übertrager verwendet.

Durch die wachsenden Aufgabengebiete in der Optik, z. B. in der optischen Signalverarbeitung und optischen Meßtechnik, ist es zunehmend von Interesse, für Lichtwellen als Träger eine Einseitenbandmodulation durchzuführen. In diesem Fall würden als Multiplizierer beispielsweise Flüssigkeitskristalle oder elektro-optische Modulatoren, z. B. Pockelszellen zwischen gekreuzten Polarisatoren, eingesetzt werden. Solche optischen Bausteine sind in "Applied Optics and Optical Engineering", Vol. VI, R. Kingslake und B. J. Thompson in Academic Press, New York, London, Toronto, Sydney, San Francisco, 1980, Kapitel 5, beschrieben. Die 90°-Phasenschiebung des Trägers würde durch ein entsprechendes optisches Bauelement oder eine optische Weglängeneinstellung realisiert. Ein solcher Einseitenbandmodulator wäre jedoch bei Verwendung von Flüssigkeitskristallen nur für Signalfrequenzen bis zu 100 Hz realisierbar, bei Verwendung von Pockelszellen ist zur Ansteuerung eine Spannung von einigen 100 V des niederfrequenten Signals notwendig. Beide Bauelemente weisen zudem eine hohe Temperaturempfindlichkeit auf.

Es ist beispielsweise aus "Fourier Optics and Radar Signal Processing" von M. King in "Applications of Optical Fourier Transforms", H. Stark Ed., Academic Press, New York, London 1982, Seite 238, bekannt, daß als Einseitenbandmodulator ein akusto-optischer Modulator eingesetzt werden kann. Der ihn beleuchtende Lichtstrahl ist der Träger, die ihn ansteuernde Hochfrequenzschwingung das aufzumodulierende Signal. Als Ausgangssignal weist er entweder unter positivem oder negativem Bragg-Winkel einen Lichtstrahl auf, der das obere oder untere Seitenband repräsentiert. Die Frequenzen des oberen und unteren Seitenbands sind gleich der Summe bzw. Differenz der Lichtfrequenz und der Hochfrequenz, ihre Phasen gleich der Summe bzw. Differenz der Anfangsphase des einfallenden Lichtstrahls und der Hochfrequenzschwingung. Diese Eigenschaft des akusto-optischen Modulators gilt aber nicht für niedrigere Frequenzen, da nur ab einer gewissen Grenzfrequenz sich Bragg-Beugung einstellt. Diese Grenzfrequenz liegt bei einigen Megahertz.

Aus der EP 0016608 ist ein optischer Einseitenbandmodulator mit Interferometeraufbau bekannt, bei dem ein akusto-optischer Modulator in einem Interferometerzweig angeordnet ist. Der akusto-optische Modulator wird mit kohärentem Licht als Träger und einem aufzumodulierenden, hochfrequenten, elektrischen Signal gespeist. Wenn das zu übertragende Signal niederfrequenter ist, wird seine Frequenz durch Modulation auf eine entsprechende Zwischenfrequenz im Megahertzbereich oder höher angehoben. Am Ausgang des akusto-optischen Modulators erscheint ein Informationslichtstrahl, der zusammen mit einem überlagerten Referenzlichtstrahl im anderen Interferometerzweig über einen Lichtleiter übertragen wird. Mit einem optischen Detektor wird der Unterschied zwischen dem Referenzlichtstrahl und dem Informationslichtstrahl festgestellt, dessen Frequenzen sich um die Zwischenfrequenz und Signalfrequenz unterscheiden.

Es ist Aufgabe der vorliegenden Erfindung, einen optischen Einseitenbandmodulator für Signale zu schaffen, der für Signalfrequenzen in einem Frequenzbereich von beliebig niedrigen Frequenzen bis zu einigen Megahertz problemlos einsetzbar ist und an den beiden Ausgängen jeweils einen Lichtstrahl liefert, dessen Austrittlichtfrequenz um die Signalfrequenz erniedrigt oder erhöht ist.

Diese Aufgabe wird erfindungsgemäß durch die Merkmale im Kennzeichenteil des Anspruchs 1 gelöst. Eine kohärente Lichtquelle liefert den Träger für das aufzumodulierende Signal. Es wird ein Interferometeraufbau z. B. nach Mach-Zehnder oder Michelson verwendet. In jedem Interferometerzweig befindet sich ein akusto-optischer Modulator. In dem einen Interferometerzweig wird außerdem der Lichtstrahl um 90° in der Phase verschoben. Die akusto-optischen Modulatoren werden nicht mit dem aufzumodulierenden Signal selbst angesteuert, sondern von einer amplitudenmodulierten Hochfrequenzschwingung, deren Einhüllende das Signal bildet. Ihre Hochfrequenz wird so gewählt, daß der austretende Lichtstrahl erster Ordnung problemlos weiterverarbeitet werden kann. Diese Hochfrequenz liegt wesentlich niedriger als die Lichtfrequenz und höher als die Signalfrequenz. Vor die akusto-optischen Modulatoren sind zwei Amplitudenmodulatoren geschaltet, deren Eingangssignale jeweils die Hochfrequenzschwingung und einmal das niederfrequentere Signal selbst und zum anderen das um 90° phasenverschobene niederfrequentere Signal bilden. Der 90° phasenverschobene Lichtstrahl und das 90° phasenverschobene Signal werden z. B. im gleichen akusto-optischen Modulator miteinander verknüpft.

Es verlassen den akusto-optischen Modulator in jedem Interferometerzweig ein Lichtstrahl nullter Ordnung und ein Lichtstrahl erster Ordnung unter positivem oder negativem Bragg-Winkel, dessen Größe durch die Hochfrequenzschwingung bestimmt wird. Es wird in beiden Interferometerzweigen der Lichtstrahl +1. Ordnung oder -1. Ordnung weiterverarbeitet. Im folgenden wird die Signalverarbeitung für den Lichtstrahl +1. Ordnung beschrieben. Das Frequenzspektrum dieses Lichtstrahls besteht aus zwei Seitenbändern mit zwei um die Signalfrequenz $\Omega_{NF}$ erhöhte oder erniedrigte Austrittslichtfrequenzen $\omega_L + \Omega_{HF} \pm \Omega_{NF}$. Die Lichtwelle ist durch folgende Gleichung zu beschreiben:

$$A.\sin(\Omega_{NF} + \Phi_{NF})t.\sin\left[(\omega_L + \Omega_{HF})t + \varsigma_L + \Phi_{HF}\right] =$$
$$1/2\ A\ \{\cos\left[(\omega_L + \Omega_{HF} - \Omega_{NF}).\ t + \varsigma_L + \Phi_{HF} - \Phi_{NF}\right]$$
$$-\cos\left[(\omega_L + \Omega_{HF} + \Omega_{NF}).\ t + \varsigma_L + \Phi_{HF} + \Phi_{NF})\right]\}$$

Die den zweiten akusto-optischen Modulator verlassende Lichtwelle +1. Ordnung ist durch folgende Gleichung zu beschreiben:

$$A.\cos(\Omega_{NF} + \Phi_{NF})t.\cos[(\omega_L + \Omega_{HF}).t + \varsigma_L + \Phi_{HF}] =$$
$$1/2\ A\ \{\cos\left[(\omega_L + \Omega_{HF} - \Omega_{NF}).t + \varsigma_L + \Phi_{HF} - \Phi_{NF}\right] +$$
$$+\cos[(\omega_L + \Omega_{HF} + \Omega_{NF}).t + \varsigma_L + \Phi_{HF} + \Phi_{NF})]$$

Der Unterschied der beiden Gleichungen besteht nur im Vorzeichen des zweiten Terms hinter dem Gleichheitszeichen, wobei der erste Term das obere und der zweite Term das untere Seitenband repräsentieren.

Diese beiden Lichtstrahlen werden überlagert. An den beiden Ausgängen des Interferometeraufbaus weist dann der eine Lichtstrahl das obere und der andere Lichtstrahl das untere Seitenband auf. Die Frequenz ist gleich der Summen-bzw. Differenzfrequenz bestehend aus der Summe von Lichtfrequenz $\omega_L$ und Hochfrequenz $\Omega_{HF}$ zuzüglich oder abzüglich der Signalfrequenz $\Omega_{NF}$, seine Amplitude gleich der Amplitude A des aufmodulierten Signals, seine Phase gleich der Summen- bzw. Differenzphase bestehend aus der Summe der Anfangsphasen von einfallendem Lichtstrahl $\varsigma_L$ und Hochfrequenzschwingung $\Phi_{HF}$ zuzüglich oder abzüglich der Signalphase $\Phi_{NF}$. Die Amplituden des Lichts und der Hochfrequenzschwingung sind bekannt und gleich "1" gesetzt.

Die Vorteile des erfindungsgemäßen optischen Einseitenbandmodulators nach Anspruchs 1 bestehen insbesondere darin, daß übliche optische und elektronische Baugruppen verwendet werden können, daß Signale großer Frequenzbandbreite aufmoduliert werden können und dabei Temperaturstabilität und eine unproblematische Ansteuerung gewährleistet sind. Diese Vorteile, die durch den Einsatz von akusto-optischen Modulatoren für Signale über 100 Megahertz aus dem o.g. Aufsatz bekannt sind, werden mit dem erfindungsgemäßen Einseitenbandmodulator für die Modulation von Signalen mit einer Signalfrequenz von beispielsweise einem Bruchteil von 1 Hz oder einigen Hz oder 100 Hz oder KHz oder MHz ausgenutzt und bleiben erhalten. Die 90°-Phasenschieberschaltung für das aufzumodulierende Signal ist abhängig von seiner Bandbreite zu dimensionieren. Entsprechende Schaltungen gehören seit langem zum Stand der Technik.

Ein weiterer Vorteil besteht darin, daß Amplitude und Phase des Signals trotz der großen Frequenzunterschiede zum Trägersignal unmittelbar auf den austretenden Lichtstrahl übertragen werden und zu einer Weiterverarbeitung mit optischen Mitteln zur Verfügung stehen. Bei einer Informationsübertragung mehrerer parallel vorliegender Signale gleicher Signalfrequenz ist der Einsatz entsprechend vieler erfindungsgemäßer Einseitenbandmodulatoren nach Anspruch 1, die synchron bezüglich Trägersignal und Hochfrequenzschwingung arbeiten, besonders vorteilhaft, wenn es auf die Erhaltung der Phasenbeziehungen der Signale zueinander ankommt, da diese Phasenbeziehungen unmittelbar auch zwischen den Lichtstrahlen am Ausgang der Einseitenbandmodulatoren bestehen.

Der Vorteil der erfindungsgemäßen Ausbildung des einen Interferometerzweigs gemäß Anspruch 2 liegt darin, daß für die 90°-Phasenschiebung des Lichts kein spezieller optischer Baustein benötigt wird.

Der Vorteil der erfindungsgemäßen Weiterbildung des Einseitenbandmodulators nach Anspruch 3 besteht darin, daß eine zusätzliche Justierung des optischen Lichtwegs für den einen Interferometerzweig wegfällt. Eine 90°-Phasenschieberschaltung für die Hochfrequenzschwingung ist simpel zu realisieren, da nur die Hochfrequenz schmalbandig in der Phase verschoben zu werden braucht.

Der zusätzlich einstellbare Phasenschieber gemäß Anspruch 4 ist dann von Vorteil, wenn Weglängen im Interferometeraufbau nicht exakt eingestellt wurden und eine erneute Justierung durch Phasenschiebung der Hochfrequenzschwingung ersetzt wird.

Bei der vorteilhaft mehrkanaligen Ausführung des erfindungsgemäßen optischen Einseitenbandmodulators nach Anspruch 5 werden beispielsweise mehrere Signale gleicher oder unterschiedlicher Signalfrequenz und/oder unterschiedlicher Signalphase auf gleich viele kohärente Lichtstrahlen aufmoduliert. Dazu werden einzelne akusto-optische Elemente für jeden Interferometerzweig jeweils in einer Zeile zu einem akusto-optischen Modulator zusammengefaßt und mit kohärentem Licht beleuchtet. Die einzelnen akusto-optischen Elemente der ersten Zeile werden durch die mit den Signalen modulierten Hochfrequenzschwingungen gleicher Hochfrequenz akustisch angesteuert. Bei einer räumlich parallelen Anordnung der zweiten Interferometerzweige wird die zweite Zeile vorteilhaft neben der ersten Zeile angeordnet und von der gleichen Lichtquelle beleuchtet. Die 90°-Phasendrehung des Trägers wird durch entsprechende Phasendrehung der Hochfrequenzschwingung bewirkt. Nach Strahlenumlenkung der Lichtstrahlen in den ersten Interferometerzweigen und Überlagerung mit den Lichtstrahlen aus den zweiten Interferometerzweigen erscheinen am Ausgang Lichtstrahlen, deren Phasenbeziehungen bei gleicher Signalfrequenz gleich den Phasenbeziehungen der niederfrequenten Signale sind. Bei unterschiedlichen Signalfrequenzen weisen die Lichtstrahlen jeweils um die entsprechende Signalfrequenz verschobene Frequenzen auf. Der Frequenzunterschied zwischen den Lichtstrahlen ist gleich dem Frequenzunterschied zwischen den Signalfrequenzen. Der Vorteil eines optischen Einseitenbandmodulators nach Anspruch 5 besteht in der kompakten Bauweise, bei der eine Justierung der einzelnen optischen Bauelemente besonders einfach durchführbar ist. Zur Strahlenumlenkung und Strahlüberlagerung können handelsübliche Komponenten verwendet werden.

Der Vorteil der erfindungsgemäßen Ausgestaltung des mehrkanaligen Einseitenbandmodulators nach Anspruch 6 mit zwei übereinander angeordneten aus mehreren Elementen bestehenden akusto-optischen Modulatoren besteht darin, daß eine Strahlumlenkung und -überlagerung im Interferometeraufbau durch die kohärente Bestrahlung und einer Sammellinse in Form einer Zylinderlinse ersetzt wird. Die Lichtstrahlen in den beiden korrespondierenden Interferometerzweigen sind parallel und werden in der Brennebene hinter der Zylinderlinse jeweils in einem Punkt fokussiert und damit überlagert. Die einzelnen Punkte besitzen eine horizontale Struktur, in der horizontale Streifen abwechselnd das obere und das untere Seitenband repräsentieren.

Besonders vorteilhaft ist ein solcher optischer Einseitenbandmodulator gemäß Anspruch 5 oder 6 für Empfangssignale der Einzelelemente einer Antenne oder einer akustischen Basis in der Funkpeiltechnik oder in der Sonartechnik einzusetzen. Die Lichtstrahlen am Ausgang des optischen Einseitenbandmodulators geben die Phasenbeziehungen der Empfangssignale der Antenne wieder, die zum Bilden von Richtcharakteristiken benötigt werden. Da diese Phasenbeziehungen unmittelbar auf die einzelnen Lichtstrahlen übertragen werden, ist hier die Möglichkeit geschaffen, optische Mittel für eine weitere Signalverarbeitung zum Bilden und Schwenken von Richtcharakteristiken durch entsprechende Phasenkompensation oder Raumfrequenzanalyse vorzusehen. Ersetzt man z.B. die Zylinderlinse durch eine sphärische Sammellinse, so findet man in der Brennebene die Fourier-Transformierte der Lichtverteilung wieder, die in den einzelnen Streifen der Richtcharakteristik einer Antenne entspricht.

Mit der vorteilhaften Ausgestaltung des optischen Einseitenbandmodulators nach Anspruch 7 ist die Möglichkeit gegeben, den optischen Aufbau zu überprüfen. Wenn der Interferometeraufbau abgeglichen ist, ist das Ausgangssignal des Fotodetektors eine Gleichspannung. Besteht ein optischer Wegunterschied in den Interferometerzweigen, so ist der Gleichspannung eine Wechselspannung überlagert, deren Amplitude ein Maß für den optischen Wegunterschied ist, auch wenn die 90°-Phasenschiebung der Lichtstrahlen gegeneinander nicht korrekt ist, wird eine Wechselspannung am Ausgang der Fotodiode festgestellt, da die 90°-Phasenverschiebung des Lichts einer optischen Weglänge in Größe einer viertel Lichtwellenlänge entspricht. Durch Veränderung der Länge des Interferometerzweigs kann dann beispielsweise abgeglichen werden. Anstelle einer Justierung im optischen Aufbau ist ein optischer Einseitenbandmodulator nach Anspruch 4 besonders vorteilhaft durch Einstellen des Phasenschiebers für die Hochfrequenzschwingung abgleichbar, da die Phasenschiebung der Hochfrequenzschwingung die gleiche Wirkung wie die Phasenschiebung des Lichtstrahls hat. Dieser Abgleich ist besonders einfach und elegant, da in den optischen Aufbau nicht mechanisch eingegriffen zu werden braucht.

Ein solcher optischer Einseitenbandmodulator wird nach einer vorteilhaften Weiterbildung gemäß Anspruch 8 zu meßtechnischen Zwecken verwendet. Die Lage oder Bewegung eines Objekts werden vermessen, indem der Lichtstrahl des einen Interferometerzweigs über Spiegel auf das Objekt gelenkt, vom Objekt reflektiert und in den Interferometerzweig wieder eingespiegelt wird. Befindet sich das Objekt in der richtigen Position, sind die optischen Weglängen der Lichtstrahlen in den beiden Interferometerzweigen abgeglichen und der Fotodetektor liefert ein Gleichspannungssignal. Bei einer Ablage des Objekts ist die Größe der Amplitude der sich überlagernden Wechselspannung ein Maß für die Ablage oder den zurückgelegten Weg bei Bewegung des Objekts. Die Richtung der Bewegung oder Ablage ist durch die Änderung des Momentanwerts der Wechselspannung zu positiven oder negativen Werten, z. B. durch einen phasenselektiven Verstärker feststellbar. Der Vorteil dieser Weiterbildung besteht darin, daß Weglängen im Bereich von Nanometern durch dieses Verfahren meßtechnisch einfach zu erfassen sind.

Mit einem aufgeweiteten Lichtstrahl in beiden Interferometerzweigen und einer flächigen Fotodetektoranordnung kann dieses Meßverfahren mit räumlicher Auflösung realisiert werden, beispielsweise zum Darstellen von Oberflächenprofilen.

Da mit dem Fotodetektor festgestellt wird, ob die optischen Weglängen im Interferometeraufbau abgeglichen sind, besteht eine weitere vorteilhafte Verwendung des optischen Einseitenbandmodulators nach der Erfindung in der Eigenschaft, Brechungsindizes und deren Veränderungen durch äußere Einflüsse wie Temperatur- oder Druckänderungen festzustellen, zu vermessen und/oder auszuregeln.

Die Erfindung ist anhand von in der Zeichnung dargestellten Ausführungsbeispielen eines optischen Einseitenbandmodulators nachfolgend näher beschrieben. Es zeigen:

Fig. 1 eine Prinzipdarstellung eines optischen Einseitenbandmodulators mit einem Mach-Zehnder-Interferometeraufbau,

Fig. 2 eine mehrkanalige Anordnung,

Fig. 3 einen gegenüber Fig. 2 modifizierten Aufbau einer mehrkanaligen Anordnung,

Fig. 4 ein mehrkanaliger, mit übereinander angeordneten akusto-optischen Modulatoren angeordneter Aufbau mit Zylinderlinse und

Fig. 5 einen optischen Einseitenbandmodulator mit Prüfeinrichtung und Anzeige optischer Weglängen.

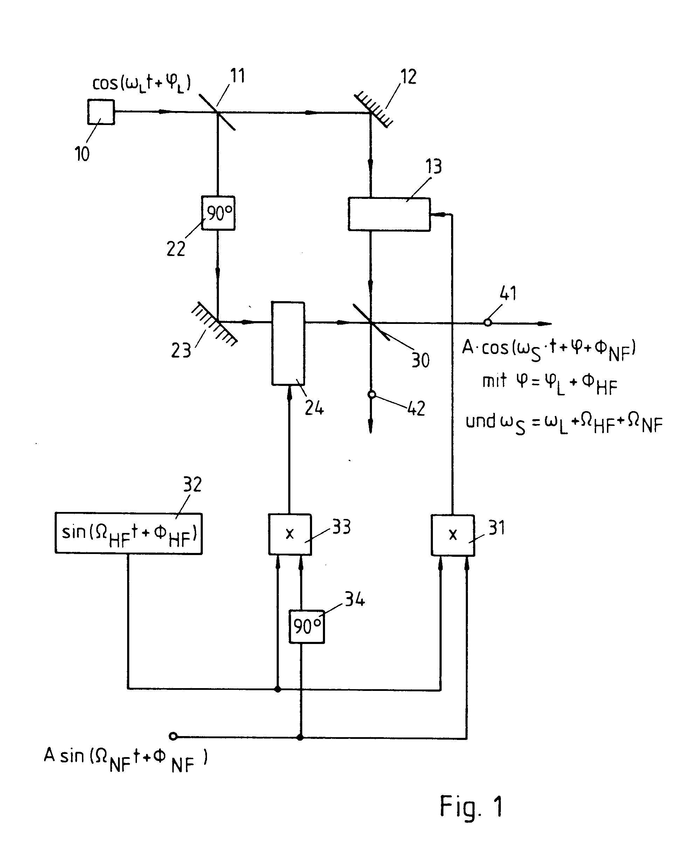

Fig. 1 zeigt einen prinzipiellen Aufbau eines optischen Einseitenbandmodulators in Form eines Interferometers nach Mach-Zehnder. Eine Lichtquelle 10 liefert ein Trägersignal $\cos(\omega_L.t + \varsigma_L)$ mit einer Lichtfrequenz $\omega_L$ und einer Anfangsphase $\varsigma_L$, das über einen halbdurchlässigen Spiegel 11 auf zwei Interferometerzweige aufgeteilt wird. Auf das Trägersignal soll ein Signal $A.\sin(\Omega_{NF}.t + \Phi_{NF})$ der Amplitude A, Signalfrequenz $\Omega_{NF}$ und Signalphase $\Phi_{NF}$ aufmoduliert werden. Der Lichtstrahl im ersten Interferometerzweig wird nach einer Umlenkung über einen ersten Spiegel 12 einem ersten akusto-optischen Modulator 13 zugeführt. Der Lichtstrahl, der am halbdurchlässigen Spiegel 11 reflektiert wird, gelangt in dem zweiten Interferometerzweig über einen optischen 90°-Phasenschieber 22, z. B. Glasplatte definierter Dicke, und einen zweiten Spiegel 23 zu einem zweiten akusto-optischen Modulator 24. Die beiden die akusto-optischen Modulatoren 13 und 24 verlassenden Lichtstrahlen gleicher erster Ordnung werden einander mittels eines halbdurchlässigen Spiegels 30 überlagert.

Der akusto-optische Modulator 13 im ersten Interferometerzweig wird von einem ersten Amplitudenmodulator 31 angesteuert, dessen Eingangssignale eine Hochfrequenzschwingung und das Signal $A.\sin(\Omega_{NF}.t + \Phi_{NF})$ sind. Der Amplitudenmodulator 31 ist mit einem Hochfrequenzgenerator 32 verbunden. Der Hochfrequenzgenerator 32 ist außerdem mit einem zweiten Amplitudenmodulator 33 verbunden, dessen zweites Eingangssignal das um 90° phasenverschobene Signal $A.\cos(\Omega_{NF}.t + \Phi_{NF})$ ist. Dazu ist vor dem zweiten Eingang des zweiten Amplitudenmodulators 33 eine Phasenschieberschaltung 34 angeordnet. Der zweite Amplitudenmodulator 33 ist mit dem akusto-optischen Modulator 24 im zweiten Interferometerzweig verbunden. Ebenso ist es möglich, einen Interferometeraufbau des optischen Einseitenbandmodulators entsprechend einem Michelson-Interferometer oder einem anderen Interferometer zu realisieren.

An den Ausgängen 41 und 42 des Interferometeraufbaus erhält man zwei Lichtstrahlen. Der Lichtstrahl am Ausgang 41 weist als Amplitude die Amplitude A des Signals, als Summenfrequenz $\omega_S$ die Summe aus Lichtfrequenz $\omega_L$, Hochfrequenz $\Omega_{HF}$ zuzüglich Signalfrequenz $\Omega_{NF}$ und als Summenphase die Summe $\varsigma$ der Anfangsphasen $\varsigma_L$ und $\varsigma_{HF}$ des Lichts und der Hochfrequenzschwingung zuzüglich der Signalphase $\Phi_{NF}$ des Signals auf. Für den Fall, daß die Anfangsphasen $\varsigma_L = 0$ des Lichts und der Hochfrequenzschwingung $\Phi_{NF} = 0$ gleich Null sind, weist der Lichtstrahl am Ausgang 41 die Signalphase $\Phi_{NF}$ auf.

Der Lichtstrahl am Ausgang 42 hat dann die Amplitude A, eine Differenzfrequenz, die gleich der Summe $\omega_L + \Omega_{HF}$ abzüglich der Signalfrequenz $\Omega_{NF}$ ist, und eine Differenzphase, die gleich der Summe der Anfangsphasen $\varsigma_L$ und $\Phi_{HF}$ abzüglich der Signalphase $\Phi_{NF}$ ist. Durch andere Anordnung der Strahlteiler können die Seitenbänder an den Ausgängen vertauscht sein.

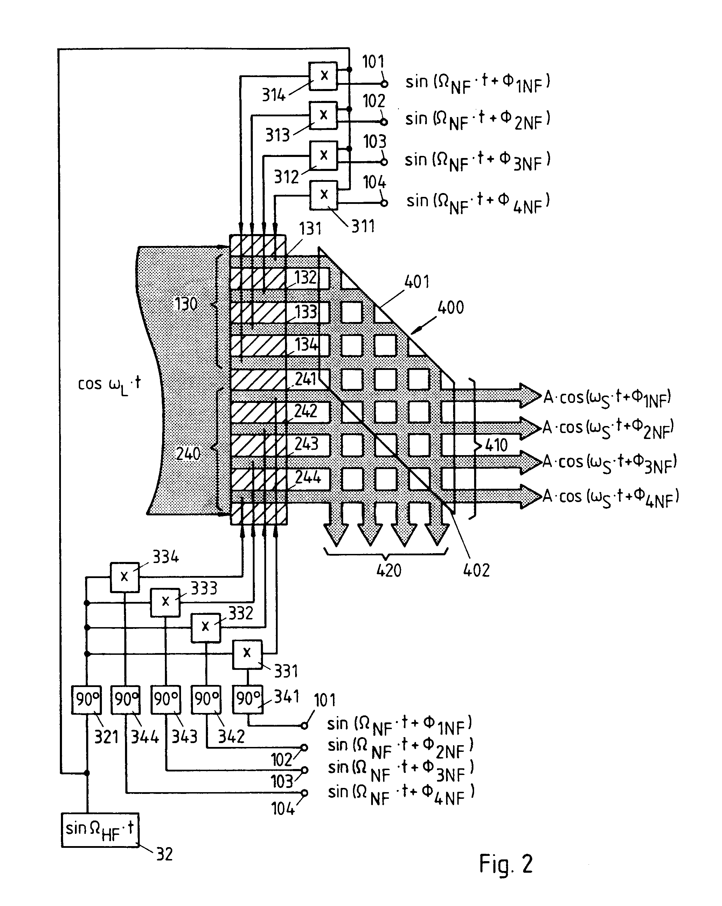

Fig. 2 zeigt einen vierkanaligen Aufbau eines optischen Einseitenbandmodulators, bei dem die Interferometerzweige parallel angeordnet sind. Anschlüsse 101 bis 104 sind beispielsweise mit Empfangswandlern einer Sonarbasis verbunden. Ihre Empfangssignale sind niederfrequente Signale mit einer Signalfrequenz von beispielsweise 10 kHz. Sie sind aufgrund der Einfallsrichtung der empfangenen Schallwellenfront phasenverschoben und weisen die Signalphasen $\Phi_{1NF}$, $\Phi_{2NF}$, ..., $\Phi_{4NF}$ auf. Anstelle der Strahlaufteilung für die beiden Interferometerzweige durch den halbdurchlässigen Spiegel 11 gemäß Fig. 1 wird hier das Licht so aufgeweitet, daß beide Interferometerzweige in einem kohärenten Lichtstrahl liegen. Jeweils vier als Zeile aufgebaute akusto-optische Elemente 131 bis 134 und 241 bis 244 bilden die akusto-optischen Modulatoren 130 bzw. 240, die von Amplitudenmodulatoren 311 bis 314 bzw. 331 bis 334 angesteuert werden. Anstelle der 90°-Phasendrehung des Lichtstrahls im zweiten Interferometerzweig durch den optischen 90°-Phasenschieber 22 in Fig.1 ist hier eine Phasenschieberschaltung 321 dem Hochfrequenzgenerator 32 nachgeschaltet, über den die mit dem akusto-optischen Modulator 240 verbundenen Amplitudenmodulatoren 331 bis 334 mit der Hochfrequenzschwingung versorgt werden. Mit der Phasenschieberschaltung 321 wird die Hochfrequenzschwingung um 90° phasenverschoben. Die 90°-Phasenschiebung für die niederfrequenten Signale an den Anschlüssen 101 bis 104 wird von Phasenschieberschaltungen 341 bis 344 vorgenommen, die ebenfalls mit den Amplitudenmodulatoren 331 bis 334 verbunden sind. Die Amplitudenmodulatoren 311 bis 314 für den akusto-optischen Modulator 130 sind unmittelbar mit dem Hochfrequenzgenerator 32 und mit den Anschlüssen 101 bis 104 verbunden.

Die von den akusto-optischen Modulatoren 130 und 240 in die 1. Ordnung gebeugten Lichtstrahlen werden in einer optischen Anordnung 400 überlagert. Die optische Anordnung 400 besteht aus einer spiegelnden Fläche 401. An der spiegelnden Fläche 401 wird beispielsweise der das akusto-optische Element 131 verlassende Lichtstrahl reflektiert. Dieser Lichtstrahl durchläuft die optische Anordnung 400 und wird an der parallel zur spiegelnden Fläche 401 liegenden halbdurchlässigen Spiegelfläche 402 jeweils zur Hälfte reflektiert und durchgelassen. Der reflektierte Lichtstrahl überlagert sich mit dem das akusto-optische Element 241 verlassenden Lichtstrahl des akusto-optischen Modulators 240 im zweiten Interferometerzweig und bildet das obere Seitenband $A.\cos(\omega_S.t + \Phi_{1NF})$. Dieser den optischen Einseitenbandmodulator verlassende Lichtstrahl hat die gleiche Phase $\Phi_{1NF}$, wie das niederfrequente Signal am Anschluß 101.

Verfolgt man den Lichtweg im zweiten Kanal des optischen Einseitenbandmodulators, so sieht man, daß der Lichtstrahl, der das akusto-optische Element 132 verläßt, an der spiegelnden Fläche 401 reflektiert wird und an der halbdurchlässigen Spiegelfläche 402 mit dem Lichtstrahl des akusto-optischen Elements 242 im zweiten Interferometerzweig überlagert wird. Am Ausgang der optischen Anordnung 400 erscheint der Lichtstrahl $A.\cos(\omega_S.t + \Phi_{2NF})$, der die Signalphase $\Phi_{2NF}$ des niederfrequenten Signals am Anschluß 102 wiedergibt. Diese Signalverarbeitung in den einzelnen Interferometerzweigen sorgt dafür, daß die Lichtstrahlen am Ausgang 410 des vierkanaligen optischen Einseitenbandmodulators den Informationsinhalt der niederfrequenten Signale an den Anschlußklemmen 101 bis 104 wiedergeben. Die Lichtstrahlen am Ausgang 420 geben das untere Seitenband der Modulationsprodukte an, deren Frequenz gleich der Summe von Lichtfrequenz $\omega_L$ und Hochfrequenz $\Omega_{HF}$ abzüglich der Signalfrequenz $\Omega_{NF}$ ist. Ihre Phasen sind gleich den negativen Signalphasen $-\Phi_{1NF}, -\Phi_{2NF}, -\Phi_{3NF}, -\Phi_{4NF}$.

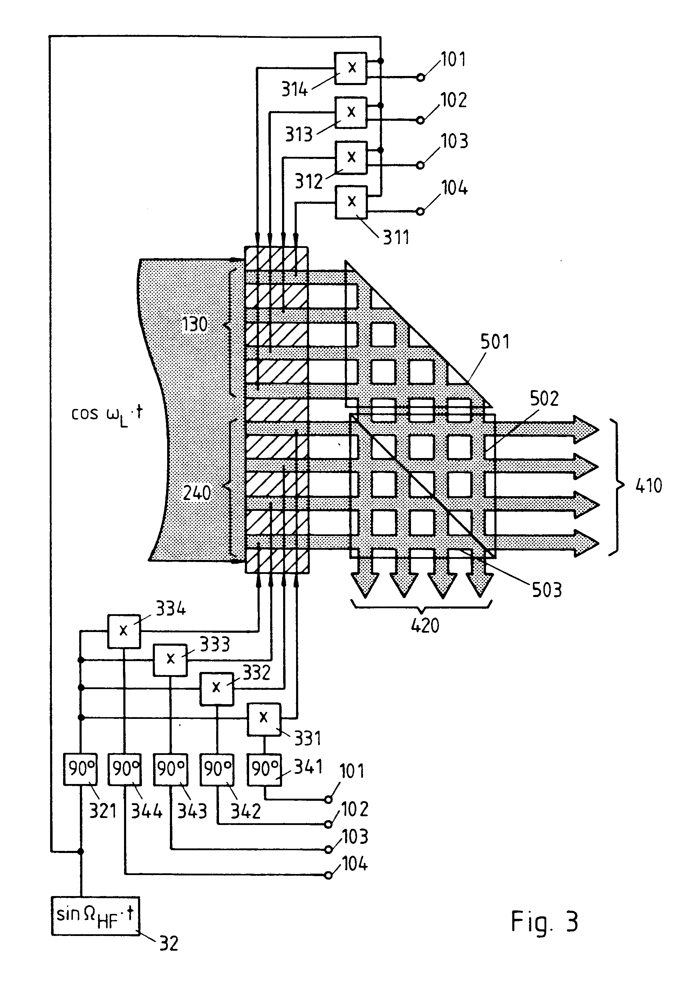

Fig. 3 zeigt ebenso wie Fig. 2 einen vierkanaligen Einseitenbandmodulator, bei dem die optische Anordnung 400 durch handelsübliche optische Komponenten, nämlich ein Prisma 501 zur Strahlenumlenkung und zwei miteinander verkittete Prismen 502 und 503 als Strahlteilerwürfel, realisiert ist. Die Lichtstrahlen an den Ausgängen 410 und 420 geben das obere und untere Seitenband, wie in Fig. 2 beschrieben, wieder.

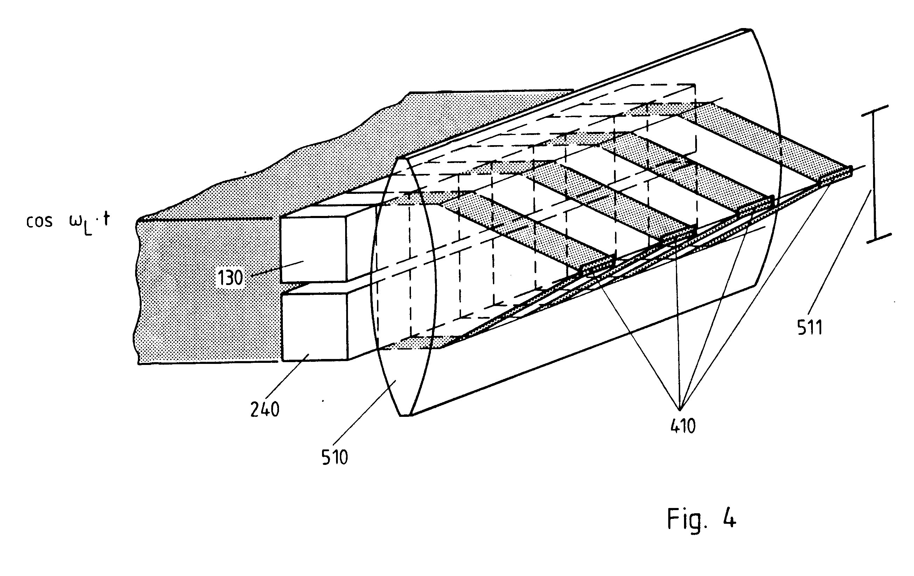

Bei der Ausführungsform eines vierkanaligen Einseitenbandmodulators in Fig. 4 sind die beiden akusto-optischen Modulatoren 130 und 240 übereinander angeordnet und werden kohärent beleuchtet. Die Ansteuerung ist nicht dargestellt, sie ist dieselbe wie in Fig. 2 und 3 und dort dargestellt und beschrieben. Anstelle der optischen Anordnung 400 bzw. der Prismen 501, 502 und 503 ist den akusto-optischen Modulatoren 130 und 240 eine Zylinderlinse 510 nachgeordnet. In Ihrer Brennebene 511 liegt der Ausgang 410 des Interferometeraufbaus. Dort werden die Lichtstrahlen der vier ersten und zweiten Interferometerzweige, die jeweils übereinanderliegen, überlagert. Auf einem Schirm würde senkrecht ein horizontales Streifenmuster entstehen, bei dem benachbarte Streifen das obere und untere Seitenband repräsentieren. Beispielhaft ist der Ausgang 410 eingezeichnet.

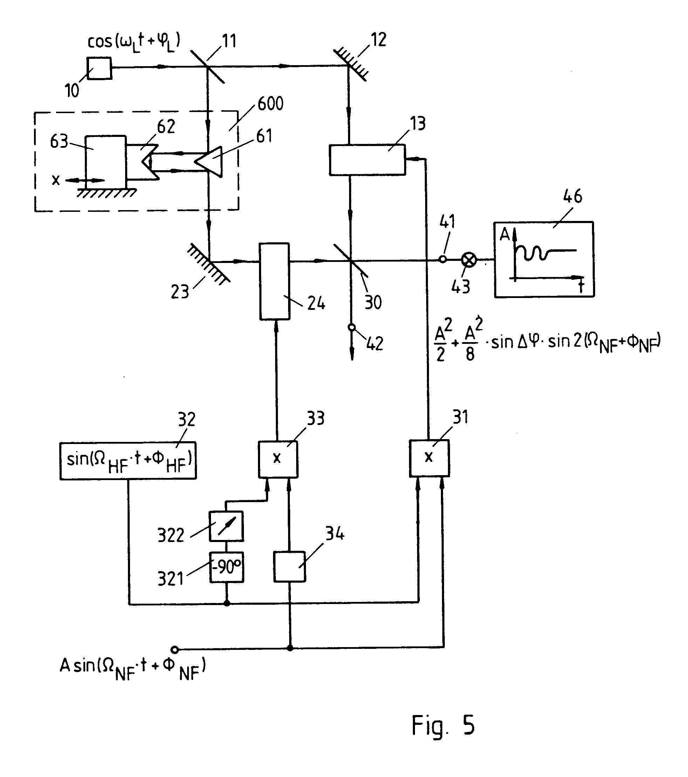

Fig. 5 zeigt eine Erweiterung der in Fig. 1 gezeigten prinzipiellen Darstellung des optischen Einseitenbandmodulators, bei der die Funktion des optischen 90°-Phasenschiebers 22 im zweiten Interferometerzweig von der Phasenschieberschaltung 321 entsprechend Fig. 2 und 3 übernommen wird. Für die weiteren Überlegungen wird eine Meßeinrichtung 600 im zweiten Interferometerzweig zuerst außer acht gelassen. Ihre Verwendbarkeit wird erst später erläutert.

Am Ausgang 41 ist als Fotodetektor eine Fotodiode 43 angeordnet, die das das obere Seitenband repräsentierende Licht empfängt und als quadrierender, über hohe Lichtfrequenzen integrierender Detektor die Intensität mißt. Am Ausgang 45 erscheint bei korrektem Abgleich des Interferometeraufbaus eine Gleichspannung, die proportional $A^2/2$ ist. Die Gleichspannung wird auf einem nachgeordneten Oszillographen mit Gleich- und Wechselspannungsanzeige 46 angezeigt. Dieser Gleichspannung überlagert sich bei einer Dejustierung des optischen Aufbaus eine Wechselspannung mit der doppelten Signalfrequenz $\Omega_{NF}$. Ihre Amplitude ist proportional dem Sinus der Phasenverschiebung $\Delta\zeta$ der sich überlagernden Lichtstrahlen in den beiden Interferometerzweigen. Diese Phasenverschiebung entsteht bei einer optischen Wegdifferenz für die Lichtstrahlen gegenüber dem abgeglichenen Zustand in den beiden Interferometerzweigen. Zum Abgleich können entweder die optischen Komponenten oder Weglängen des Interferometeraufbaus verändert werden oder - wie hier dargestellt - ein einstellbarer Phasenschieber 322 vorgesehen werden, der zwischen der 90°-Phasenschieberschaltung 321 und dem zweiten Amplitudenmodulator 33 für das um 90° phasenverschobene Signal angeordnet wird. Der Phasenschieber 322 wird so lange verstellt, bis die Gleich- und Wechselspannungsanzeige 46 nur noch eine Gleichspannung anzeigt. Eine Veränderung der optischen Weglänge beispielsweise durch Temperaturschwankungen kann durch das Ausgangssignal der Fotodiode mit Hilfe des Phasenschiebers 322 ausgeregelt werden.

Diese Meßanordnung kann nicht nur zur Justierung des Interferometeraufbaus benutzt werden, sondern wird für hochpräzise Positionsaufgaben und Meßaufgaben verwendet. Beispielhaft ist in einem der Interferometerzweige die Meßeinrichtung 600, hier in den zweiten eingebaut. Der Lichtstrahl des zweiten Interferometerzweiges wird über Umlenkspiegel 61 und Retroreflektor 62 auf ein Objekt 63 umgelenkt, das in X-Richtung exakt ausgerichtet werden soll. Der Retroreflektor 62 ist mit dem Objekt 63 fest verbunden. Die exakte Position des Objekts 63 ist dann erreicht, wenn der Lichtweg vom halbdurchlässigen Spiegel 11 über den Umlenkspiegel 61 und den Retroreflektor 62, den zweiten Spiegel 23 bis zum halbdurchlässigen Spiegel 30 im zweiten Interferometerzweig gleich dem Lichtweg vom halbdurchlässigen Spiegel 11 über den ersten Spiegel 12 bis zum halbdurchlässigen Spiegel 30 im ersten Interferometerzweig ist oder ein ganzzahliges Vielfaches der Lichtwellenlänge ist. Die Gleich- und Wechselspannungsanzeige 46 zeigt dann eine Gleichspannung an.

Die Gleich- und Wechselspannungsanzeige 46 kann auch als Weg- oder Positionsanzeige des Objekts 63 dienen. Die Amplitude a, der die Gleichspannung überlagernden Wechselspannung gibt die Größe der Positionsverschiebung $|\Delta x|$ gegenüber dem abgeglichenen Zustand wieder:

$$ a \sim \sin\ 2\tilde{\pi}\ \frac{|\Delta x|}{\lambda}, $$

wobei $\lambda$ die Lichtwellenlänge ist.

Mit dem optischen Einseitenbandmodulator entsprechend Fig. 5 wird der optische Weg zwischen den beiden Interferometerzweigen gemessen und abgeglichen. Bei Einbau einer Meßeinrichtung 600 in einem der Interferometerzweige kann entweder die Positionierung eines Objekts vorgenommen werden oder Abweichungen von der genauen Position gemessen werden. Ebenso ist es bei einer Durchstrahlung eines Materials mit variablem Brechungsindex möglich, die Veränderungen des optischen Wegs aufgrund der Veränderung des Brechungsindex', z. B. durch Temperatur oder Druckeinflüsse, auszumessen und Angaben über den Brechungsindex, beziehungsweise die äußeren Einflüsse auf den Brechungsindex, zu machen.

**Patentansprüche**

1. Optischer Einseitenbandmodulator zur Modulation von Licht mit Signalen, deren Frequenzen wesentlich niedriger als die Lichtfrequenz sind, unter Verwendung eines Interferometeraufbaus mit kohärentem Licht als Träger und einem akusto-optischen Modulator, gekennzeichnet durch zwei Interferometerzweige mit je einem akusto-optischen Modulator (13, 24 bzw. 130, 240) im Interferometeraufbau, durch einen ersten Amplitudenmodulator (31 bzw. 311 bis 314) für das Signal und einen zweiten Amplitudenmodulator (33 bzw. 331 bis 334) für das um 90° phasenverschobene Signal zur Ansteuerung der akusto-optischen Modulatoren (13, 24 bzw. 130, 240), durch einen Hochfrequenzgenerator (32) für eine Hochfrequenzschwingung mit einer Hochfrequenz, die wesentlich kleiner als die Lichtfrequenz und größer als die Signalfrequenz ist, durch eine Verbindung des Hochfrequenzgenerators (32) mit dem ersten und zweiten Amplitudenmodulator (31, 311 bis 314, 33, 331 bis 334), der einen ersten Eingang für das Signal und einen zweiten Eingang für die Hochfrequenzschwingung aufweist, und durch Mittel in einem der Interferometerzweige für eine Träger-Phasenverschiebung von 90° zwischen beiden Interferometerzweigen und mit getrennter Abnahme eines Lichtstrahls des das Signal wiedergebenden oberen und/oder unteren Seitenbands an Ausgängen (41, 42 bzw. 410, 420) des Interferometeraufbaus.

2. Optischer Einseitenbandmodulator nach Anspruch 1, gekennzeichnet durch eine Wegdifferenz von einem Viertel der Lichtwellenlänge zwischen den Interferometerzweigen als Mittel für die Träger-Phasenverschiebung von 90°.

3. Optischer Einseitenbandmodulator nach Anspruch 1, gekennzeichnet durch eine zwischen Hochfrequenzgenerator (32) und einen Amplitudenmodulator (33) geschaltete 90°-Phasenschieberschaltung (321) als Mittel zur Träger-Phasenverschiebung zwischen den Interferometerzweigen.

4. Optischer Einseitenbandmodulator nach Anspruch 2 oder 3, gekennzeichnet durch einen einstellbaren Phasenschieber (322) für das Hochfrequenzsignal am Eingang des einen Amplitudenmodulators (33 bzw. 331 bis 334).

5. Optischer Einseitenbandmodulator nach einem der Ansprüche 1 bis 4, gekennzeichnet durch einen N-kanaligen Interferometeraufbau mit 2N in einer Zeile angeordneten, akusto-optischen Elementen (131 bis 134 und 241 bis 244), deren eine Hälfte den akusto-optischen Modulator (130) der N ersten Interferometerzweige und deren andere Hälfte den akusto-optischen Modulator (240) der N zweiten Interferometerzweige bilden, durch ein Prisma (501) zur Strahlenumlenkung für die N ersten Interferometerzweige und einen Strahlteiler, bestehend aus zwei in der Diagonale miteinander verkitteten Prismen (502, 503), zur Überlagerung der korrespondierenden Lichtstrahlen aus den N ersten und N zweiten Interferometerzweigen.

6. Optischer Einseitenbandmodulator nach einem der Ansprüche 1 bis 4, gekennzeichnet durch einen N kanaligen Interferometeraufbau mit zwei übereinander angeordneten, aus N nebeneinanderliegenden akusto-optischen Elementen bestehenden akusto-optischen Modulatoren, zum Bilden von N nebeneinanderliegenden ersten Interferometerzweigen und N zweiten nebeneinanderliegenden und parallel über den N ersten befindlichen Interferometerzweigen, durch eine Zylinderlinse, deren Achse parallel zu den akusto-optischen Modulatoren angeordnet ist zum Überlagern korrespondierender Lichtstrahlen aus den N ersten und zweiten Interferometerzweigen in der Fokusebene der Zylinderlinse, die den Ausgang des N kanaligen Interferometeraufbaus bildet.

7. Optischer Einseitenbandmodulator nach einem der Ansprüche 1 bis 6, gekennzeichnet durch einen Fotodetektor (Fotodiode 43) am Ausgang des Interferometeraufbaus und eine Gleich- und/oder Wechselspannungsanzeige (46), vorzugsweise einen Oszillographen.

8. Meßvorrichtung zum Bestimmen optischer Weglängendifferenzen zu einem Prüfling, bestehend aus einem optischen Einseitenbandmodulator nach Anspruch 7 bei welchem in einem der Interferometerzweige Mittel zum optischen Einkoppeln des prüflings in den Interferometerzweig angeordnet sind.

9. Meßvorrichtung nach Anspruch 8, dadurch gekennzeichnet, daß die Mittel zum optischen Einkoppeln des Prüflings aus Umlenkspiegel (61) und Retroreflektor (62) bestehen.

10. Verwendung eines optischen Einseitenbandmodulators nach Anspruch 7 zur Vermessung optischer Eigenschaften eines Prüflings, wobei der Prüfling zur Durchstrahlung unmittelbar in einem der Interferometerzweige angeordnet wird.

## Claims

1. Optical single-sideband modulator for modulation of light with signals whose frequencies are much lower than the light frequency, using an interferometer arrangement with coherent light as carrier and an acousto-optical modulator, characterised by two interferometer branches, each of these having an acousto-optical modulator (13, 24 or 130, 240) in the interferometer arrangement, by a first amplitude-modulator (31 or 311 to 314) for the signal and a second amplitude-modulator (33 or 331 to 334) for the 90°-phase-shifted signal for driving the acousto-optical modulators (13, 24 or 130, 240), by a high frequency generator (32) for a high frequency oscillation with a high frequency which is much lower than the light frequency and higher than the signal frequency, by a connection of the high frequency generator (32) to the first and second amplitude-modulators (31, 311 to 314, 33, 331 to 334), which each have a first input for the signal and a second input for the high frequency oscillation, and by the means in one of the interferometer branches for producing a carrier phase-shift of 90° between the two interferometer branches and with separate output of a light beam of the signal-reproducing upper and/or lower sideband at outputs (41, 42 or 410, 420) of the interferometer arrangement.

2. Optical single-sideband modulator according to claim 1, characterised by a path difference of one quarter of the light wavelength between the interferometer branches as a means of producing the carrier phase-shift of 90°.

3. Optical single-sideband modulator according to claim 1, characterised by a 90° phase-shifter circuit (321) interposed between the high frequency generator (32) and an amplitude modulator (33) as a means of producing the carrier phase-shift between the interferometer branches.

4. Optical single-sideband modulator according to claim 2 or 3, characterised by an adjustable phase-shifter (322) for the high frequency signal at the input of one amplitude modulator (33 or 331 to 334).

5. Optical single-sideband modulator according to one of the claims 1 to 4, characterised by an N-channel interferometer arrangement with 2N linearly arranged acousto-optical elements (131 to 134 and 241 to 244), half of which form the acousto-optical modulator (130) of the N first interferometer branches and the other half of which form the acousto-optical modulator (240) of the N second interferometer branches, by a prism (501) for beam deviation for the N first interferometer branches and a beam-splitter, consisting of two prisms (502, 503) diagonally cemented to each other, for the purpose of superimposing the corresponding light beams from the N first and N second interferometer branches.

6. Optical single-sideband modulator according to one of the claims 1 to 4, characterised by an N-channel interferometer arrangement with two acousto-optical modulators arranged one above another and each consisting of N acousto-optical elements arranged side-by-side for the purpose of forming N first interferometer branches arranged side-by-side and N second interferometer branches arranged side-by-side and parallel above the N first interferometer branches, by a cylindrical lens whose axis is arranged parallel to the acousto-optical modulators for the purpose of superimposing corresponding light beams from the N first and second interferometer branches in the focal plane of the cylindrical lens, which forms the output of the N-channel interferometer arrangement.

7. Optical single-sideband modulator according to one of the claims 1 to 6, characterised by a photodetector (photodiode 43) at the output of the interferometer arrangement and a DC and/or AC voltage indicator (46), preferably an oscilloscope.

8. Measuring facility to determine optical wavelength differences relative to a test subject, consisting of an optical single-sideband modulator according to claim 7 in which one of the interferometer branches contains the means of optically coupling the test subject into the interferometer branch.

9. Measuring facility according to claim 8, characterised in that the means of optically coupling the test subject consist of a deviating mirror (61) and a retroreflector (62).

10. Use of an optical single-sideband modulator according to claim 7 for measuring optical characteristics of a test subject, where the test subject is situated directly in one of the interferometer branches so that light can pass through the test subject.

**Revendications**

1. Modulateur optique à bande latérale unique conçu pour moduler de la lumière à l'aide de signaux dont les fréquences sont nettement plus basses que la fréquence de la lumière en utilisant un montage à interféromètres à lumière cohérente en tant que porteur et un modulateur acousto-optique, caractérisé par deux branches d'interféromètre disposant chacune d'un modulateur acousto-optique (13, 24 ou 130, 240) dans le montage à interféromètre, par un premier modulateur d'amplitude (31 ou 311 à 314) pour le signal et un deuxième modulateur d'amplitude (33 ou 331 à 334) pour le signal à phase décalée de 90° destiné à la commande des modulateurs acousto-optiques (13, 24 resp. 130, 240), par un générateur à haute fréquence (32) pour une oscillation haute fréquence avec une haute fréquence beaucoup plus basse que la fréquence de la lumière et plus haute que la fréquence du signal, par une liaison du générateur haute fréquence (32) avec le premier et deuxième modulateur d'amplitude (31, 311 à 314, 33, 331 à 334) présentant une première entrée pour le signal et une deuxième entrée pour l'oscillation de haute fréquence, et dans l'une des branches d'interféromètre des moyens destinés à réaliser un décalage de phase porteur de 90° entre les deux branches d'interféromètre et avec un prélèvement séparé d'un rayon de lumière de la bande latérale supérieure et/ou inférieure reproduisant le signal aux sorties (41, 42 ou 410, 420) du montage à interféromètre.

2. Modulateur optique a bande latérale unique conformément à la revendication 1 caractérisé par une différence de trajet d'un quart de la longueur d'onde de la lumière entre les branches d'interféromètre en tant que moyen pour le décalage de phase porteur de 90°.

3. Modulateur optique à bande latérale unique conformément à la revendication 1, caractérisé par un circuit de décalage de phase de 90° (321) disposé dans le circuit entre le générateur de haute fréquence (32) et un modulateur d'amplitude (33) prévu en tant que moyen pour le décalage de phase porteur entre les branches d'interféromètre.

4. Modulateur optique à bande latérale unique conformément à la revendication 2 ou 3, caractérisé par un décaleur de phase réglable (322) pour le signal haute fréquence disposé à l'entrée de l'un des modulateurs d'amplitude (33 ou 331 à 334).

5. Modulateur optique à bande latérale unique conformément aux revendications 1 à 4, caractérisé par un montage à interféromètre à N-canaux à 2 N éléments acousto-optiques (131 à 134 et 241 à 244) disposés de façon linéaire et dont une moitié forme le modulateur acousto-optique (130) des N premières branches d'interféromètre et dont l'autre moitié, constitue le modulateur acousto-optique (240) des N deuxièmes branches d'interféromètre, par un prisme (501) destiné à la déviation de rayons pour les N premières branches d'interféromètre et un fractionneur de faisceau constitué de deux prismes cimentés l'un à l'autre dans la diagonale (502, 503) pour superposer les faisceaux de lumière correspondants en provenance des N premières et N deuxièmes branches d'interféromètre.

6. Modulateur optique à bande latérale unique conformément à l'une des revendications 1 à 4, caractérisé par un montage d'interféromètre à N canaux à deux modulateurs acousto-optiques constitués de N éléments acousto-optiques disposés l'un au-dessus de l'autre et chacun constitué de N éléments acousto-optiques disposés l'un à coté de l'autre pour former N premières branches d'interféromètre montées l'une à coté de l'autre et N deuxièmes branches d'interféromètre disposées l'une à coté de l'autre et parallèlement au-dessus des N premières branches d'interféromètre, par une lentille cylindrique, dont l'axe est disposé parallèlement aux modulateurs acousto-optiques prévus pour superposer les faisceaux lumineux provenant des N premières et deuxièmes branches d'interféromètre au niveau de focalisation de la lentille cylindrique formant la sortie du montage d'interféromètre à N canaux.

7. Modulateur optique à bande latérale unique conformément à l'une des revendications 1 à 6, caractérisé par un détecteur photographique (photodiode 43) située à la sortie du montage d'interféromètre et un affichage à courant continu et/ou alternatif (46), de préférence un oscillographe.

8. Dispositif de mesure conçu pour déterminer les différences de longueur d'onde optiques par rapport à une éprouvette, constitué par un modulateur optique à bande latérale unique conformément à la revendication 7 dans lequel, des moyens ont dans l'une des branches d'interféromètres été aménagés pour coupler par voie optique l'éprouvette dans la branche d'interféromètre.

9. Dispositif de mesure conformément à la revendication 8, caractérisé par le fait que les moyens prévus pour le couplage optique de l'éprouvette sont constitués par un miroir de déviation (61) et un rétroréflecteur (62).

10. Utilisation d'un modulateur optique à bande latérale unique conformément à la revendication 7, prévu pour déterminer les caractéristiques optiques d'une éprouvette auquel cas, l'éprouvette est aux fins de pénétration de la lumière directement disposée dans l'une des branches de l'interféromètre.

Fig. 1

Fig. 2

cos ω_L·t

sin Ω_HF·t

Fig. 3

Fig. 4

$\cos\ \omega_L \cdot t$

130

240

510

410

511

EP 0 316 513 B1

14

$\cos(\omega_L t + \varphi_L)$

$\dfrac{A^2}{2} + \dfrac{A^2}{8} \cdot \sin \Delta \varphi \cdot \sin 2(\Omega_{NF} + \Phi_{NF})$

$\sin(\Omega_{HF} \cdot t + \Phi_{HF})$

$A \sin(\Omega_{NF} \cdot t + \Phi_{NF})$

Fig. 5